# EUROPEAN PATENT SPECIFICATION

(11) **EP 2 863 313 B1**
(45) Date of publication and mention of the grant of the patent: **25.05.2016**
(21) Application number: 14187847.0
(22) Date of filing: 07.10.2014
(51) Int. Cl.: G06F 12/10, H04L 29/08

(54) **A method and a device for controlling memory-usage of a functional component**
Verfahren und Vorrichtung zur Steuerung der Speicherverwendung einer funktionalen Komponente
Procédé et dispositif pour commander l'utilisation de mémoire d'un composant fonctionnel

(30) Priority: 16.10.2013 FI 20136023
(43) Date of publication of application: 22.04.2015
(73) Proprietor: Coriant Oy, 02630 Espoo (FI)
(72) Inventor: Hallivuori, Ville, 02610 Espoo (FI); Kamunen, Kari, 01450 Vantaa (FI); Kuusisaari, Juhamatti, 00680 Helsinki (FI)
(74) Representative: Berggren Oy Ab

(56) References cited:
- US-A- 6 075 938
- US-A1- 2005 216 696
- US-B1- 6 457 107

## Description

### Field of the invention

The invention relates to a method and to a device for controlling memory-usage of a functional component that can be, for example but not necessarily, a network interface of a network element, e.g. a network interface of an Internet Protocol "IP" router. Furthermore, the invention relates to a computer program for controlling memory-usage of a functional component and to a network element.

### Background

A virtual memory is a concept relating to a memory management technique that maps memory addresses used by a process, called virtual addresses, into physical addresses of a physical memory. The virtual memory seen by a process can appear as a collection of fixed-length contiguous virtual memory blocks called virtual memory pages which are basic data units for managing the mapping between the virtual memory and the physical memory. The size of each virtual memory page is advantageously a power of 2 such as, for example but not necessarily, 2¹² bytes = 4096 bytes. The operating system manages the mapping between the physical memory and the virtual memory. Address translation functionality, often referred to as a memory management unit "MMU" or a paged memory management unit "PMMU", automatically translates virtual addresses to physical addresses so that the process under consideration can operate with the virtual addresses.

In conjunction with many electronic devices, such as e.g. network elements of a data transfer network, it is not only a central processing unit "CPU" which runs one or more processes using a physical memory but there are also peripheral components such as network interfaces, e.g. line cards "LC", and network processors "NP" which also use the physical memory. Therefore, there is a need to manage the memory-usages of the one or more processes run by the CPU and of the peripheral components so that they do not disturb each other. A traditional way to arrange the memory-usages of the one or more processes run by the CPU and of the peripheral components is to handle the processes run by the CPU and the peripheral components in the same way so that, for each of these, a specific virtual memory is provided by an operating system that manages the mapping between the physical memory and the virtual memories and the memory management unit "MMU" is used for translating the virtual addresses to the physical addresses. The memory-usage of peripheral components such as e.g. network processors, which handle data packets or frames, can be rapidly changing over time. Therefore, an inconvenience related to the above-described traditional way for managing the memory-usages is that the operating system has to frequently carry out the memory management for the peripheral components and, as a corollary, resources running the operation system may be so heavily loaded that these resources may in some cases constitute a bottle neck limiting the capacity of the whole electronic device.

Publication US2005216696 describes a multiprocessor system that includes a plurality of microprocessors configured to operate on a plurality of operating systems, respectively, and a memory section configured to have a plurality of memory spaces respectively allocated to the plurality of microprocessors. Each microprocessor implements a translation look-aside buffer "TLB" and a page table register. The TLB stores a copy of at least a part of data of the memory space corresponding to the microprocessor, and the copy includes a relation of each virtual address of a virtual address space and a corresponding physical address of a physical address space of the memory space. The page table register refers to the TLB in response to a virtual address generated by an application program so as to determine the physical address corresponding to the said virtual address. The microprocessor accesses the memory space based on the determined physical address.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new device, as defined in claim 1, for controlling memory-usage of at least one functional component that can be, for example but not necessarily, a network interface of a network element, e.g. a network interface of an Internet Protocol "IP" router.

The above-mentioned data item may include the physical memory address related to the physical memory area under consideration, or the data item may contain information with the aid of which the physical memory address is derivable or obtainable.

The above-described device is based on the principle that the data item providing access to the physical memory area under consideration is written to the physical memory so that the data item is readable with the aid of the virtual memory address related to the virtual memory page that is mapped to the physical memory area under consideration. Hence, when allocating the physical memory area under consideration, the data item providing the access to this physical memory area can be obtained with the aid of the said virtual memory address. Thus, the typical problem related to many hardware architectures that physical addresses resulting in translations done by a memory management unit "MMU" cannot be delivered to functional components, such as e.g. network interfaces, can be circumvented in a robust way.

In a device according to an advantageous and exemplifying embodiment of the present invention, the processor system is configured to prevent changes of the above-mentioned mapping between the virtual memory pages and the physical memory areas in situations where another mapping between another virtual memory and other physical memory areas is formed or changed. The changes can be prevented for example with the aid of one or more suitable flag variables.

In accordance with the invention, there is provided also a new network element, as defined in claim 11, than can be for example an Internet Protocol "IP" router, an Ethernet switch, a multiprotocol label switching "MPLS" switch, a network element of a software defined network "SDN", and/or an Asynchronous Transfer Mode "ATM" switch.

In accordance with the invention, there is provided also a new method, as defined in claim 15, for controlling memory-usage of at least one functional component.

In accordance with the invention, there is provided also a new computer program, as defined in claim 16, for controlling memory-usage of at least one functional component.

In accordance with the invention, there is provided also a new computer program product. The computer program product comprises a non-volatile computer readable medium, e.g. a compact disc "CD", encoded with a computer program according to the invention.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as open limitations that neither exclude nor require the existence of also un-recited features. The features recited in the accompanied dependent claims are mutually freely combinable unless otherwise explicitly stated. Furthermore, it is to be understood that the use of "a" or "an", i.e. a singular form, throughout this document does not exclude a plurality.

### Brief description of the figures

The exemplifying embodiments of the invention and their advantages are explained in greater detail below with reference to the accompanying drawings, in which:
figure 1 illustrates an exemplifying data structure related to an exemplifying embodiment of the invention,
figure 2 shows a flow chart of a method according to an exemplifying embodiment of the invention for controlling memory-usage of at least one functional component,
figure 3 illustrates an exemplifying data structure related to an exemplifying embodiment of the invention, and
figure 4 shows a schematic illustration of a network element comprising a device according to an exemplifying embodiment of the invention.

### Description of exemplifying embodiments

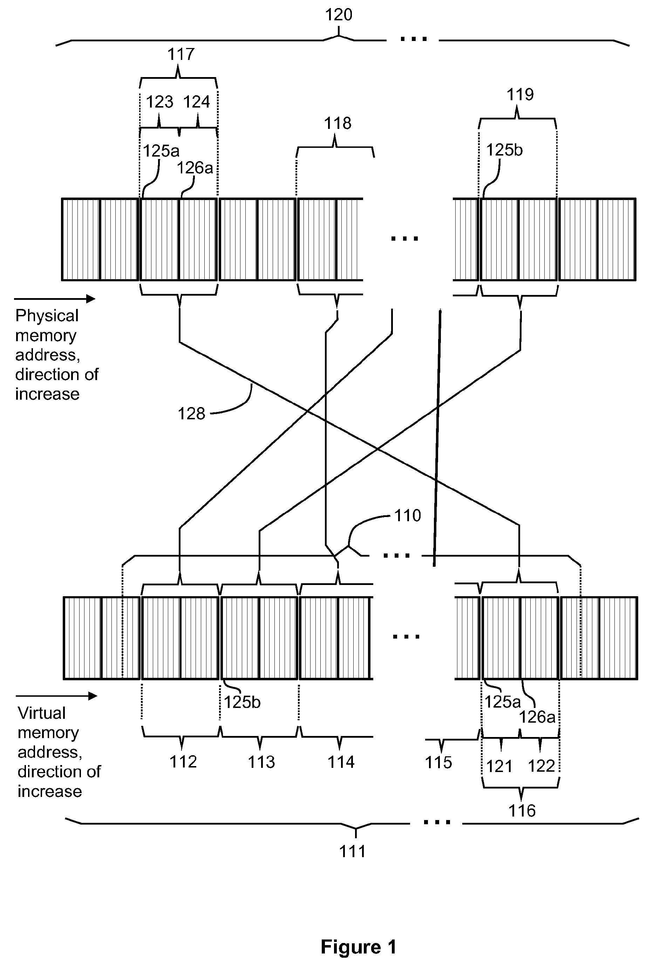

Figure 1 illustrates an exemplifying data structure related to an exemplifying embodiment of the invention. A virtual memory 111 is organized to comprise fixed-length contiguous virtual memory blocks called virtual memory pages. In figure 1, some of the virtual memory pages are denoted with reference numbers 112, 113, 114, 115, and 116. The virtual memory 111 is implemented with a physical memory 120 which can be realized with one or more memory devices such as for example one or more random access memory "RAM" circuits. The virtual memory pages are basic data units for managing the mapping between the virtual memory 111 and the physical memory 120. In figure 1, the mapping between the virtual memory pages and fixed-length contiguous physical memory areas of the physical memory 120 are illustrated with connection lines one of which is denoted with a reference-number 128. In the exemplifying case illustrated in figure 1, the virtual memory page 113 is implemented with a physical memory area 119, the virtual memory page 114 is implemented with a physical memory area 118, and the virtual memory page 116 is implemented with a physical memory area 117. The size of each virtual memory page is advantageously a power of 2 such as, for example but not necessarily, 2¹² bytes = 4096 bytes.

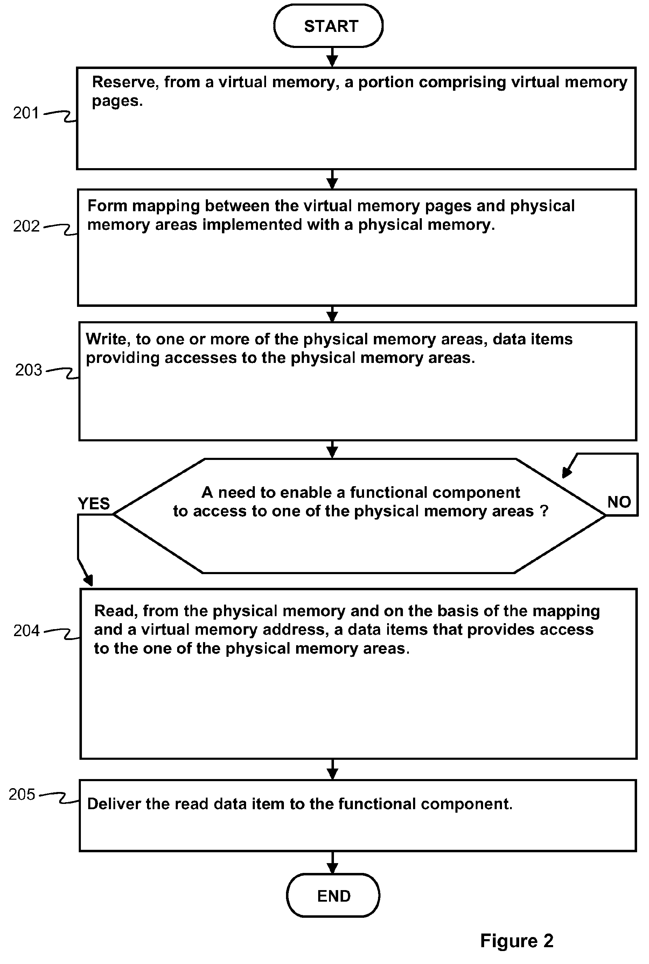

A method according to an exemplifying embodiment of the invention for controlling memory-usage of at least one functional component is illustrated below with reference to the data structure illustrated in figure 1 and to a method flow chart shown in figure 2. The above-mentioned functional component can be, for example but not necessarily, a network interface or a network processor "NP" of a network element of a data transfer network. Figure reference numbers having the first digit '1' refer to figure 1, and correspondingly figure reference numbers having the first digit '2' refer to figure 2. In a phase 201, the method comprises reserving a portion 110 of the virtual memory 111, where the portion comprises the virtual memory pages 112-116. As can be seen from figure 1, the reserved portion 110 does not necessarily have to start at a boundary between adjacent virtual pages and correspondingly the reserved portion 110 does not necessarily have to end at a boundary between adjacent virtual pages. In order to simplify the memory management, the reserved portion 110 of the virtual memory is advantageously a contiguous area of the virtual memory address space as illustrated in figure 1. In a phase 202, the method comprises forming the above-mentioned mapping between the virtual memory pages and the physical memory areas implemented with the physical memory 120. Changing the mapping is advantageously prevented for example in situations where another mapping between another virtual memory and other physical memory areas are formed or changed. The changes can be prevented for example with the aid of one or more suitable flag variables for indicating that the mapping under consideration is locked. In a phase 203, the method comprises writing, to each of the physical memory areas, a data item providing access to the physical memory area under consideration. Without limiting generality and for illustrative purposes, we consider the virtual memory pages 113 and 116 and the corresponding physical memory areas 119 and 117. In the exemplifying case illustrated in figure 1, the data item providing access to the physical memory area 117 is a data item 125a stored in the virtual memory page 116 and thereby in the physical memory area 117. The data item 125a may include the physical memory address related to the physical memory area 117 or information with the aid of which the physical memory address is derivable or obtainable. In this exemplifying case, the data item 125a is stored at the beginning of the virtual memory page 116 and thereby at the beginning of the physical memory area 117. The data item 125a may include information indicating for example the physical memory address of the beginning of the physical memory area 117. It is also possible that the data item 125a is stored at another pre-determined location of the virtual memory page 116 and thereby at the corresponding other location of the physical memory area 117. As well, it is also possible that the data item 125a includes information indicating the physical memory address of another pre-determined location of the physical memory area 117. Correspondingly, the data item providing access to the physical memory area 119 is a data item 125b stored in the virtual memory page 113 and thereby in the physical memory area 119.

In a case where there is a need to enable the functional component to access to one of the physical memory areas, the method comprises phases 204 and 205. In the phase 204, the method comprises reading, from the physical memory 120, the data item that provides access to the physical memory area under consideration. The data item is read on the basis of the mapping between the virtual and physical memories and a virtual memory address related to a virtual memory page mapped to the physical memory area under consideration. Without limiting generality and for illustrative purposes, we can assume that the physical memory area under consideration is the physical memory area 119. In this case, the virtual memory page under consideration is the virtual memory page 113 and the above-mentioned data item is the data item 125b. The data item 125b is advantageously read so that the virtual memory address related to the virtual memory page 113 is delivered to a memory management unit "MMU" connected to the physical memory 120 and configured to translate the virtual memory address to the corresponding physical memory address in accordance with the above-mentioned mapping. In the phase 205, the method comprises delivering information indicated by the read data item 125b to the functional component so as to enable the functional component to access to the physical memory area 119. The data item 125b can be delivered to the functional component, or derivative information can be obtained with the aid of the data item 125b and thereafter the derivative information can be delivered to the functional component. The derivative information can be for example a sum of an address value expressed by the data item 125b and a pre-determined offset.

In the exemplifying case illustrated in figure 1, each of the virtual memory pages is composed of two mutually non-overlapping, equal-sized, and contiguous virtual memory sub-pages. For example, the virtual memory page 116 is composed of the virtual memory sub-pages 121 and 122. Correspondingly, each of the physical memory areas comprises two mutually non-overlapping, equal-sized, and contiguous physical memory sub-areas so that each of the physical memory sub-areas correspond to one of the virtual memory sub-pages. For example, the physical memory area 117 comprises the physical memory sub-areas 123 and 124 which correspond to the virtual memory sub-pages 121 and 122, respectively. It is worth noting that the number of the virtual memory sub-pages in each virtual memory page and correspondingly the number of the physical memory sub-areas in each physical memory area can be also greater than two. As the physical memory sub-areas are mutually equal-sized, the physical memory address related to a physical memory sub-area can be computed on the basis of the physical memory address related to another physical memory sub-area in the same physical memory area. For example, the physical memory address of the memory location storing a data item 126a is the physical memory address of the memory location storing the data item 125a added with the size of the physical memory sub-areas 123 and 124. The size of the physical memory sub-areas, and of the virtual memory sub-pages, is advantageously a power of 2 such as, for example but not necessarily, 2¹¹ bytes = 2048 bytes. The functional component using the physical memory areas can be made aware of the size of physical memory sub-areas so that the functional component is capable of forming, on the basis of the physical memory address related to one physical memory sub-area of a physical memory area, the corresponding physical memory addresses related to other physical memory sub-areas of the same physical memory area.

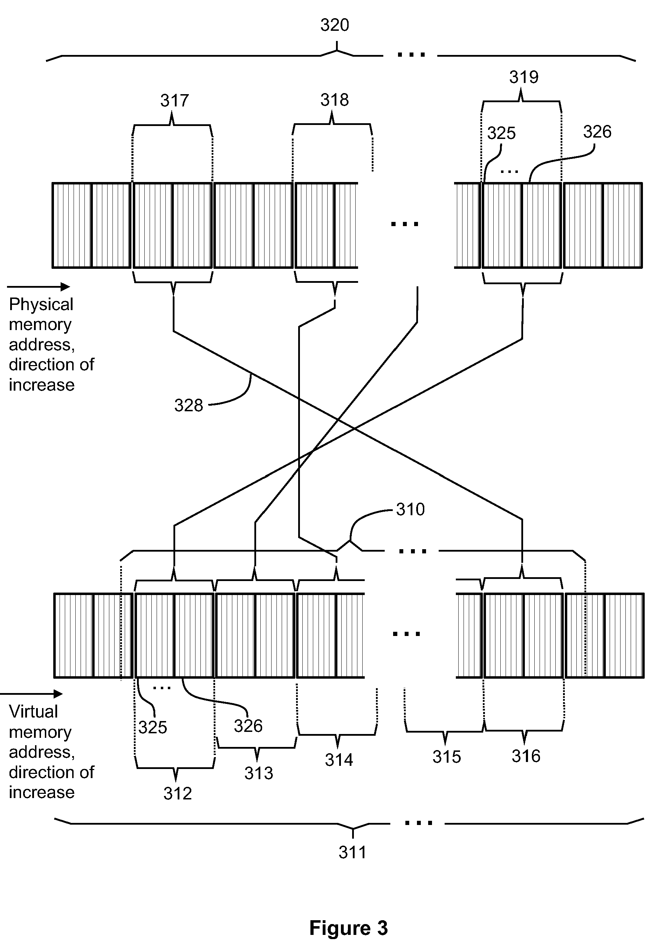

Figure 3 illustrates an exemplifying data structure related to another exemplifying embodiment of the invention. A virtual memory 311 is organized to comprise fixed-length contiguous virtual memory pages. In figure 3, some of the virtual memory pages are denoted with reference numbers 312, 313, 314, 315, and 316. The virtual memory 311 is implemented with a physical memory 320 which can be realized with one or more memory devices such as for example one or more random access memory "RAM" circuits. The virtual memory pages are basic data units for managing the mapping between the virtual memory 311 and the physical memory 320. In figure 3, the mapping between the virtual memory pages and fixed-length contiguous physical memory areas of the physical memory 320 are illustrated with connection lines one of which is denoted with a reference number 328. In the exemplifying case illustrated in figure 3, the virtual memory page 312 is implemented with a physical memory area 319, the virtual memory page 314 is implemented with a physical memory area 318, and the virtual memory page 316 is implemented with a physical memory area 317.

A method according to an exemplifying embodiment of the invention for controlling memory-usage of at least one functional component is illustrated below with reference to the data structure illustrated in figure 3 and to a method flow chart shown in figure 2. Figure reference numbers having the first digit '3' refer to figure 3, and correspondingly figure reference-numbers having the first digit '2' refer to figure 2. In the phase 201, the method comprises reserving a portion 310 of the virtual memory 111, where the portion comprises, among others, the virtual memory pages 312-316. In order to simplify the memory management, the reserved portion 310 of the virtual memory is advantageously a contiguous area of the virtual memory address space as illustrated in figure 3. In the phase 202, the method comprises forming the above-mentioned mapping between the virtual memory pages and the physical memory areas implemented with the physical memory 320. In the phase 203, the method comprises writing to the physical memory area 319 mapped to the virtual memory page 312 data items providing accesses to the other ones of the physical memory areas under consideration. In figure 3, two of the data items are denoted with reference numbers 325 and 326. Without limiting generality and for illustrative purposes, we assume that the data item 325 provides access to the physical memory area 317 and that the data item 326 provides access to the physical memory area 318. The data item 325 can include a physical memory address related to the physical memory area 317 or information on the basis of which the physical memory address is derivable or obtainable. Correspondingly, the data item 326 can include a physical memory address related to the physical memory area 318 or information on the basis of which the physical memory address is derivable or obtainable.

In a case where there is a need to enable the functional component to access to e.g. the physical memory area 318, the method comprises the phases 204 and 205. In the phase 204, the method comprises reading, from the physical memory 320, the data item 326 that provides access to the physical memory area 318. The reading operation may comprise obtaining a virtual memory address of the data item 326 on the basis of the virtual memory address related to the virtual memory page 314 that is mapped to the physical memory area 318 under consideration. Thereafter, the virtual memory address of the data item 326 is delivered to a memory management unit "MMU" connected to the physical memory 320 and configured to translate the virtual memory address of the data item 326 to the corresponding physical memory address of the data item 326 in accordance with the above-mentioned mapping between the virtual memory pages and the physical memory areas. In a method according to an exemplifying embodiment of the invention, a look-up table of virtual memory addresses related to the virtual memory page 312 and providing accesses to the data items 325,...326 is maintained. In order to obtain the virtual memory address of the data item 326, a look-up is carried out using the virtual memory address related to the virtual memory page 314 as a look-up key. In a method according to another exemplifying embodiment of the invention, the virtual memory address of the data item 326 is obtained with one or more logical and/or mathematical operations directed to the virtual memory address related to the virtual memory page 314.

A computer program according to an exemplifying embodiment of the invention comprises computer executable instructions for controlling a programmable processor to carry out a method according to any of the above-described exemplifying embodiments of the invention.

A computer program according to an exemplifying embodiment of the invention comprises software modules for controlling memory-usage of at least one functional component. The software modules comprise computer executable instructions for controlling a programmable processor to:
- reserve a portion of a virtual memory, the reserved portion of the virtual memory comprising one or more mutually non-overlapping and contiguous virtual memory pages,
- form mapping between the virtual memory pages and physical memory areas implemented with a physical memory, a particular one of the physical memory areas being mapped to a particular one of the virtual memory pages, and
- write, to one or more of the physical memory areas mapped to the virtual memory pages, data items providing accesses to the physical memory areas.

The computer program further comprises computer executable instructions for controlling a programmable processor to carry out the following actions in order to enable the functional component to access to the one of the physical memory areas:
- reading, from the physical memory and on the basis of at least the mapping and a virtual memory address related to the one of the virtual memory pages, a particular one of the data items that provides access to the one of the physical memory areas, and
- delivering information indicated by the read data item to the functional component so as to enable the functional component to access to the one of the physical memory areas.

The software modules can be e.g. subroutines or functions implemented with a suitable programming language and with a compiler suitable for the programming language and the programmable processor.

A computer program product according to an embodiment of the invention comprises a computer readable medium, e.g. a compact disc ("CD"), encoded with a computer program according to an embodiment of invention.

A signal according to an embodiment of the invention is encoded to carry information defining a computer program according to an embodiment of invention.

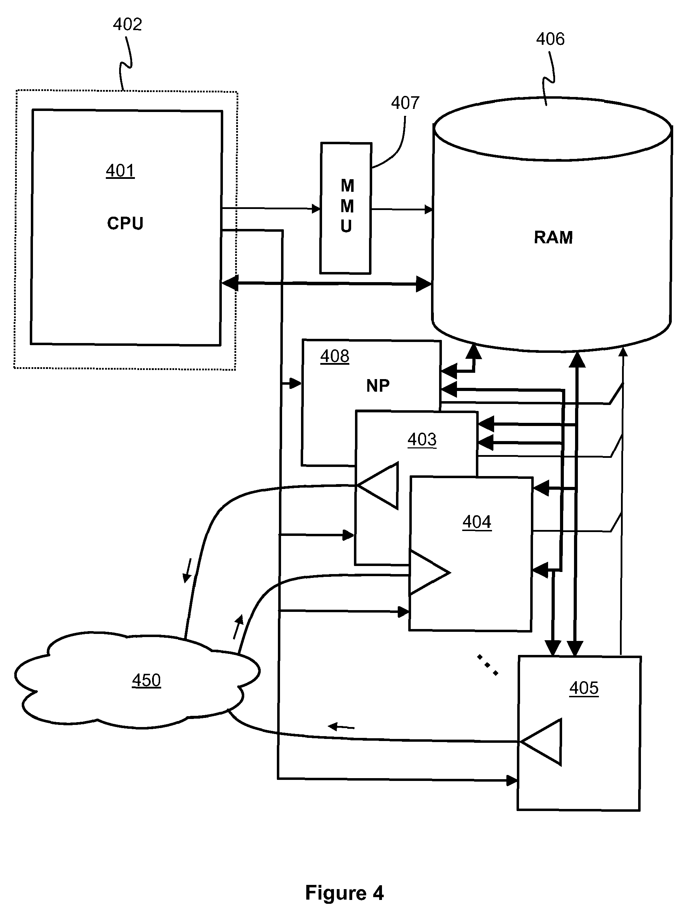

Figure 4 shows a schematic illustration of a network element according to an exemplifying embodiment of the invention. The network element can be for example an Internet Protocol "IP" router, an Ethernet switch, a multiprotocol label switching "MPLS" switch, a network element of a software defined network "SDN", and/or an Asynchronous Transfer Mode "ATM" switch. The network element comprises network interfaces for transmitting data to a data transfer network 450 and network interfaces for receiving data from the data transfer network. In figure 4, two of the network interfaces for transmitting data are denoted with reference numbers 403 and 405, and one of the network interfaces for receiving data is denoted with a reference number 404. The network element comprises a network processor "NP" 408 for running data transfer protocols being used, e.g. IP, the Transmission Control Protocol "TCP", Ethernet, ATM, and/or MPLS. The network interfaces and the network processor represent functional components for controlling and carrying out data transfer between the network element and the data transfer network 450. The network element comprises a physical memory 406 for buffering the data received and to be transmitted. The physical memory 406 can be realized with one or more memory devices such as for example one or more random access memory "RAM" circuits. The network element comprises a processor system 401 connected to the physical memory 406 and to the network interfaces 403-405. The processor system 401 is configured to constitute a device 402 for controlling usage of the physical memory 406 by the network interfaces 403-405. The processor system 401 can be implemented with one or more processor circuits, each of which can be a programmable processor circuit provided with appropriate software, a dedicated hardware processor such as, for example, an application specific integrated circuit "ASIC", or a configurable hardware processor such as, for example, a field programmable gate array "FPGA". In the exemplifying case illustrated in figure 4, the processor system 401 is a central processor unit "CPU" of the network element and the device 402 is implemented with suitable programmatic means executable by the CPU and/or hardware means belonging to the CPU. It is, however, also possible that the device for controlling the usage of the physical memory 406 comprises hardware means separate from the CPU. In conjunction with some hardware architectures, the network processor "NP" 408 is implemented with the same hardware as the CPU, whereas in conjunction with some other hardware architectures, the network processor "NP" 408 is implemented with the separate hardware.

The functionality of the network element in an exemplifying situation is illustrated below with reference to figures 4, 1 and 3. Figure reference numbers having the first digit '1' refer to figure 1, figure reference numbers having the first digit '3' refer to figure 3, and figure reference numbers having the first digit '4' refer to figure 4. The processor system 401 is configured to:
- reserve the portion 110, 310 of the virtual memory 111, 311, where the reserved portion comprises the one or more mutually non-overlapping and contiguous virtual memory pages 112-116, 312-316,
- form the mapping between the virtual memory pages and the physical memory areas implemented with the physical memory 406, the first one of the physical memory areas 117, 318 being mapped to the first one of the virtual memory pages 116, 314, and
- write, to one or more of the physical memory areas mapped to the virtual memory pages 112-116, 312, the data items 125a, 125b, 325, 326 providing accesses to the physical memory areas.

In order to enable one of the network interfaces 403-405 or the network processor 408 to access to the first one of the physical memory areas 117, 318, the processor system 401 is further configured to:
- read, from the physical memory 406 and on the basis of at least the mapping and the virtual memory address related to the first one of the virtual memory pages 116, 314, a particular one of the data items 125a, 326 that provides access to the first one of the physical memory areas 117, 318, and
- deliver information indicated by the read data item 125a, 326 to the one of the network interfaces or to the network processor 408 so as to enable the network interface or the network processor to access to the first one of the physical memory areas 117, 318.

In a network element according to an exemplifying embodiment of the invention:
- each of the virtual memory pages is composed of two or more mutually non-overlapping, equal-sized, and contiguous virtual memory sub-pages 121, 122, and
- each of the physical memory areas comprises two or more mutually non-overlapping, equal-sized, and contiguous physical memory sub-areas 123, 124 each corresponding to one of the virtual memory sub-pages of the corresponding virtual memory page.

The network interfaces 403-405 and/or the network processor 408 can be configured to use linked lists of the physical memory sub-areas for buffering the data received and to be transmitted. The data can be handled, for example, as protocol data units "PDU" such as Internet Protocol "IP" packets or Ethernet frames. Each protocol data unit can be stored to one or more of the physical memory sub-areas so that, when two or more physical memory sub-areas are needed, the two or more physical memory sub-areas constitute a linked list. The size of each physical memory sub-area, and of each virtual memory sub-page, can be for example 2048 bytes.

In a network element according to another exemplifying embodiment of the invention, each of the network interfaces 403-405 and/or the network processor 408 is configured to use linked lists of the physical memory areas for buffering the data received and to be transmitted. The size of each physical memory area, and of each virtual memory page, can be for example 4096 bytes.

In a network element according to an exemplifying embodiment of the invention, the processor system 401 is configured to reserve the portion 110, 310 of the virtual memory so that the reserved portion of the virtual memory is contiguous in the address space of the virtual memory 111, 311.

In a network element according to an exemplifying embodiment of the invention, the processor system 401 is configured to write the data items 125a, 125b, 325, 326 so that each of the data items includes a physical memory address related to the physical memory area accessible with the aid of the data item under consideration.

In a network element according to an exemplifying embodiment of the invention, the processor system 401 is configured to write each of the data items 125a, 125b to a particular one of the physical memory areas 117, 119 that is accessible with the aid of the data item under consideration. In this case, the processor system 401 is advantageously configured to read the one of the data items 125a so that the virtual memory address related to the first one of the virtual memory pages 116 is delivered to a memory management unit "MMU" 401 connected to the physical memory 406 and configured to translate the virtual memory address to a physical memory address in accordance with the mapping between the virtual and physical memories.

In a network element according to an exemplifying embodiment of the invention, the processor system 401 is configured to write all the data items 325, 326 providing accesses to the physical memory areas to a second one of the physical memory areas 319 mapped to a second one of the virtual memory pages 312. In this case, the processor system 401 is configured to carry out the following actions in order to read the one of the data items 326:
- obtaining, on the basis of the virtual memory address related to the first one of the virtual memory pages 314, another virtual memory address related to the second one of the virtual memory pages 312 and providing access to the one of the data items 326, and
- delivering the other virtual memory address to the memory management unit "MMU" 407 connected to the physical memory 406 and configured to translate the other virtual memory address to a physical memory address in accordance with the mapping.

In a network element according to an exemplifying embodiment of the invention, the processor system 401 is configured to maintain a look-up table of virtual memory addresses related to the second one of the virtual memory pages 312 and providing accesses to the data items 325, 326. The processor system 401 is configured, in order to obtain the other virtual memory address providing the access to the one of the data items 326, to carry out a look-up using the virtual memory address related to the first one of the virtual memory pages 314 as a look-up key.

In a network element according to an exemplifying embodiment of the invention, the processor system 401 is configured to carry out one or more logical operations for obtaining, on the basis of the virtual memory address related to the first one of the virtual memory pages 314, the other virtual memory address related to the second one of the virtual memory pages 312 and providing access to the one of the data items 326.

In a network element according to an exemplifying embodiment of the invention, the processor system 401 is configured to prevent changes of the mapping between the above-mentioned virtual memory pages and the above-mentioned physical memory areas in situations where another mapping between another virtual memory and other physical memory areas of the physical memory 406 is formed or changed.

The specific examples provided in the description given above should not be construed as limiting the scope and/or the applicability of the appended claims.

## Claims

1. A device for controlling memory-usage of at least one functional component, the device comprising a processor system (401) configured to:
- reserve a portion of a virtual memory, the reserved portion of the virtual memory comprising one or more mutually non-overlapping and contiguous virtual memory pages (112-116, 312-316),
- form mapping (128, 328) between the virtual memory pages and physical memory areas (117-119, 317-319) implemented with a physical memory, a first one (117, 317) of the physical memory areas being mapped to a first one (116, 316) of the virtual memory pages, and
- write, to one or more of the physical memory areas mapped to the virtual memory pages, data items enabling accesses to the physical memory areas, a first one (125a, 325) of the data items enabling access to the first one (117, 317) of the physical memory areas,
and **characterised in that**, in order to enable the functional component to access to the first one of the physical memory areas, the processor system is further configured to:
- translate a virtual memory address related to the first one of the virtual memory pages to a corresponding physical memory address in accordance with the mapping,
- use the physical memory address for reading, from the physical memory, the first one of the data items that enables access to the first one of the physical memory areas, and
- deliver information indicated by the read data item to the functional component so as to enable the functional component to access to the first one of the physical memory areas.

2. A device according to claim 1, wherein the processor system is configured to reserve the portion of the virtual memory so that the reserved portion of the virtual memory is contiguous.

3. A device according to claim 1 or 2, wherein the processor system is configured to write the data items so that each of the data items includes a physical memory address related to the physical memory area accessible with the aid of the data item under consideration.

4. A device according to any of claims 1-3, wherein the processor system is configured to write each of the data items to a particular one of the physical memory areas that is accessible with the aid of the data item under consideration.

5. A device according to claim 4, wherein the processor system is configured, in order to read the first one of the data items, to deliver the virtual memory address related to the first one of the virtual memory pages to a memory management unit connected to the physical memory and configured to translate the virtual memory address to a physical memory address in accordance with the mapping.

6. A device according to any of claims 1-3, wherein the processor system is configured to write the data items to a second one of the physical memory areas mapped to a second one of the virtual memory pages.

7. A device according to claim 6, wherein the processor system is configured, in order to read the first one of the data items, to:
- obtain, on the basis of the virtual memory address related to the first one of the virtual memory pages, another virtual memory address related to the second one of the virtual memory pages and enabling access to the first one of the data items, and
- deliver the other virtual memory address to a memory management unit connected to the physical memory and configured to translate the other virtual memory address to a physical memory address in accordance with the mapping.

8. A device according to claim 7, wherein the processor system is configured to maintain a look-up table of virtual memory addresses related to the second one of the virtual memory pages and enabling accesses to the data items, and, in order to obtain the other virtual memory address related to the second one of the virtual memory pages and enabling access to the first one of the data items, to carry out a look-up using the virtual memory address related to the first one of the virtual memory pages as a look-up key.

9. A device according to claim 7, wherein the processor system is configured to carry out one or more logical operations for obtaining, on the basis of the virtual memory address related to the first one of the virtual memory pages, the other virtual memory address related to the second one of the virtual memory pages and enabling access to the first one of the data items.

10. A device according to any of claims 1-9, wherein the processor system is configured to prevent changes of the mapping between the virtual memory pages and the physical memory areas in situations where another mapping between another virtual memory and other physical memory areas is formed or changed.

11. A network element comprising:
- one or more functional components for controlling and carrying out data transfer between the network element and a data transfer network,
- a physical memory (406) for buffering data to be transferred, and
- a processor system (401) connected to the physical memory and to the one or more functional components,
wherein the processor system is configured to constitute a device according to any of claims 1-10 for controlling usage of the physical memory by the one or more functional components.

12. A network element according to claim 11, wherein each of the functional components is configured to use linked lists of the physical memory areas for buffering the data received and to be transmitted.

13. A network element according to claim 11, wherein:
- each of the virtual memory pages is composed of two or more mutually non-overlapping, equal-sized, and contiguous virtual memory sub-pages, and
- the physical memory area mapped to the virtual memory page under consideration comprises two or more mutually non-overlapping, equal-sized, and contiguous physical memory sub-areas each corresponding to one of the virtual memory sub-pages.

14. A network element according to claim 13, wherein each of the functional components is configured to use linked lists of the physical memory sub-areas for buffering the data received and to be transmitted.

15. A method for controlling memory-usage of at least one functional component, the methog comprising:
- reserving (201) a portion of a virtual memory, the reserved portion of the virtual memory comprising one or more mutually non-overlapping and contiguous virtual memory pages (112-116, 312-316),
- forming (202) mapping (128, 328) between the virtual memory pages and physical memory areas (117-119, 317-319) implemented with a physical memory, a first one (117, 317) of the physical memory areas being mapped to a first one (116, 316) of the virtual memory pages, and
- writing (203), to one or more of the physical memory areas mapped to the virtual memory pages, data items enabling accesses to the physical memory areas, a first one (125a, 325) of the data items enabling access to the first one (117, 317) of the physical memory areas,
and **characterised in that**, in order to enable the functional component to access to the first one of the physical memory areas, the method further comprises:
- translating (204) a virtual memory address related to the first one of the virtual memory pages to a corresponding physical memory address in accordance with the mapping,
- using the physical memory address for reading (204), from the physical memory, the first one of the data items that enables access to the first one of the physical memory areas, and
- delivering (205) information indicated by the read data item to the functional component so as to enable the functional component to access to the first one of the physical memory areas.

16. A computer program for controlling memory-usage of at least one functional component, the computer program comprising computer executable instructions for controlling a programmable processor to execute method steps according to claim 15.

## Patentansprüche

1. Vorrichtung zum Regeln/Steuern einer Speicher-Verwendung von wenigstens einer funktionellen Komponente, wobei die Vorrichtung ein Verarbeitungssystem (401) umfasst, welches dazu eingerichtet ist:
- einen Abschnitt eines virtuellen Speichers zu reservieren, wobei der reservierte Abschnitt des virtuellen Speichers eine oder mehrere sich gegenseitig nicht überlappende und fortlaufende virtuelle Speicherseiten (112 - 116, 312 - 316) umfasst,
- ein Abbilden (128, 328) zwischen den virtuellen Speicherseiten und physischen Speicherbereichen (117 - 119, 317 - 319) zu bilden, welche mit einem physischen Speicher umgesetzt sind, wobei ein erster (117, 317) der physischen Speicherbereiche auf einen ersten (116, 316) der virtuellen Speicherseiten abgebildet wird, und
- Datenobjekte auf einen oder mehrere der physischen Speicherbereiche, welche auf die virtuellen Speicherseiten abgebildet sind, zu schreiben, welche Zugriffe auf physische Speicherbereiche ermöglichen, wobei ein erstes (125a, 325) der Datenobjekte Zugriff auf den ersten (117, 317) der physischen Speicherbereiche ermöglicht, und **dadurch gekennzeichnet, dass**,
um der funktionellen Komponente zu ermöglichen, auf den ersten der physischen Speicherbereiche zuzugreifen, das Verarbeitungssystem ferner dazu eingerichtet ist:
- eine virtuelle Speicheradresse, welche der ersten der virtuellen Speicherseiten zugehörig ist, in eine entsprechende physische Speicheradresse in Einklang mit dem Abbilden zu übertragen,
- die physische Speicheradresse zum Lesen des ersten der Datenobjekte von dem physischen Speicher zu verwenden, welches Zugriff auf den ersten der physischen Speicherbereiche ermöglicht, und
- Informationen, welche durch das gelesene Datenobjekt angezeigt werden, an die funktionelle Komponente zu liefern, um so der funktionellen Komponente zu ermöglichen, auf den ersten der physischen Speicherbereiche zuzugreifen.

2. Vorrichtung nach Anspruch 1, wobei das Verarbeitungssystem dazu eingerichtet ist, den Abschnitt des virtuellen Speichers zu reservieren, so dass der reservierte Abschnitt des virtuellen Speichers fortlaufend ist.

3. Vorrichtung nach Anspruch 1 oder 2, wobei das Verarbeitungssystem dazu eingerichtet ist, die Datenobjekte zu schreiben, so dass jedes der Datenobjekte eine physische Speicheradresse umfasst, welche dem physischen Speicherbereich zugehörig ist, welcher mit der Hilfe des betrachteten Datenobjekts zugänglich ist.

4. Vorrichtung nach einem der Ansprüche 1 - 3, wobei das Verarbeitungssystem dazu eingerichtet ist, jedes der Datenobjekte auf einen bestimmten der physischen Speicherbereiche zu schreiben, welcher mit der Hilfe des betrachteten Datenobjekts zugänglich ist.

5. Vorrichtung nach Anspruch 4, wobei das Verarbeitungssystem dazu eingerichtet ist, um das erste der Datenobjekte zu lesen, die virtuelle Speicheradresse, welche der ersten der virtuellen Speicherseiten zugehörig ist, an eine Speicher-Verwaltungs-Einheit zu liefern, welche mit dem physischen Speicher verbunden ist und dazu eingerichtet ist, die virtuelle Speicheradresse in eine physische Speicheradresse in Einklang mit dem Abbilden zu übertragen.

6. Vorrichtung nach einem der Ansprüche 1 - 3, wobei das Verarbeitungssystem dazu eingerichtet ist, die Datenobjekte auf einen zweiten der physischen Speicherbereiche zu schreiben, welcher auf eine zweite der virtuellen Speicherseiten abgebildet ist.

7. Vorrichtung nach Anspruch 6, wobei das Verarbeitungssystem dazu eingerichtet ist, um das erste der Datenobjekte zu lesen:
- auf der Basis der virtuellen Speicheradresse, welche der ersten der virtuellen Speicherseiten zugehörig ist, eine andere virtuelle Speicheradresse zu erhalten, welche der zweiten der virtuellen Speicherseiten zugehörig ist, und wobei Zugriff auf das erste der Datenobjekte ermöglicht wird, und
- die andere virtuelle Speicheradresse an eine Speicher-Verwaltungseinheit zu liefern, welche mit dem physischen Speicher verbunden ist, und dazu eingerichtet ist, die andere virtuelle Speicheradresse in eine physische Speicheradresse in Einklang mit dem Abbilden zu übertragen.

8. Vorrichtung nach Anspruch 7, wobei das Verarbeitungssystem dazu eingerichtet ist, eine Nachschlagetabelle von virtuellen Speicheradressen zu führen, welche der zweiten der virtuellen Speicherseiten zugehörig sind, und wobei Zugriffe auf die Datenobjekte ermöglicht werden, und, um die andere virtuelle Speicheradresse zu erhalten, welche der zweiten der virtuellen Speicherseiten zugehörig ist, und Zugriff auf das erste der Datenobjekte zu ermöglichen, ein Nachschlagen unter Verwendung der virtuellen Speicheradresse auszuführen, welche der ersten der virtuellen Speicherseiten als ein Nachschlageschlüssel zugehörig ist.

9. Vorrichtung nach Anspruch 7, wobei das Verarbeitungssystem dazu eingerichtet ist, eine oder mehrere logische Operationen auszuführen, um, auf der Basis der virtuellen Speicheradresse, welche der ersten der virtuellen Speicherseiten zugehörig ist, die andere virtuelle Speicheradresse zu erhalten, welche der zweiten der virtuellen Speicherseiten zugehörig ist, und wobei Zugriff auf das erste der Datenobjekte ermöglicht wird.

10. Vorrichtung nach einem der Ansprüche 1 - 9, wobei das Verarbeitungssystem dazu eingerichtet ist, Änderungen des Abbildens zwischen den virtuellen Speicherseiten und den physischen Speicherbereichen in Situationen zu verhindern, in denen ein anderes Abbilden zwischen einem anderen virtuellen Speicher und anderen physischen Speicherbereichen gebildet oder verändert wird.

11. Netzwerkelement, umfassend:
- eine oder mehrere funktionelle Komponenten zum Regeln/Steuern und Ausführen eines Datentransfers zwischen dem Netzwerkelement und einem Datentransfernetzwerk,
- einen physischen Speicher (406) zum Puffern von zu übertragenden Daten, und
- ein Verarbeitungssystem (401), welches mit dem physischen Speicher und der einen oder den mehreren funktionellen Komponenten verbunden ist,
wobei das Verarbeitungssystem dazu eingerichtet ist, eine Vorrichtung gemäß einem der Ansprüche 1 - 10 zum Regeln/Steuern einer Verwendung des physischen Speichers durch die eine oder die mehreren funktionellen Komponenten zu bilden.

12. Netzwerkelement nach Anspruch 11, wobei jede der funktionellen Komponenten dazu eingerichtet ist, verbundene Listen der physischen Speicherbereiche zum Puffern der Daten, welche erhalten werden und zu übertragen sind, zu verwenden.

13. Netzwerkelement nach Anspruch 11, wobei:
- jede der virtuellen Speicherseiten aus zwei oder mehr sich gegenseitig nicht überlappenden, gleichgroßen und fortlaufenden virtuellen Speicher-Unterseiten zusammengestellt ist, und
- der physische Speicherbereich, welcher auf die betrachtete virtuelle Speicherseite abgebildet ist, zwei oder mehr sich gegenseitig nicht überlappende, gleichgroße und fortlaufende physische Speicher-Unterbereiche umfasst, wobei jeder einer der virtuellen Speicher-Unterseiten entspricht.

14. Netzwerkelement nach Anspruch 13, wobei jede der funktionellen Komponenten dazu eingerichtet ist, verbundene Listen der physischen Speicher-Unterbereiche zum Puffern der Daten, welche erhalten werden und zu übertragen sind, zu verwenden.

15. Verfahren zum Regeln/Steuern einer Speicher-Verwendung von wenigstens einer funktionellen Komponente, wobei das Verfahren umfasst:
- Reservieren (201) eines Abschnitts eines virtuellen Speichers, wobei der reservierte Abschnitt des virtuellen Speichers eine oder mehrere sich gegenseitig nicht überlappende und fortlaufende virtuelle Speicherseiten (112 - 116, 312 - 316) umfasst,
- Bilden (202) eines Abbildens (128, 328) zwischen den virtuellen Speicherseiten und physischen Speicherbereichen (117 - 119, 317 - 319), welche mit einem physischen Speicher umgesetzt sind, wobei ein erster (117, 317) der physischen Speicherbereiche auf eine erste (116, 316) der virtuellen Speicherseiten abgebildet wird, und
- Schreiben (203) von Datenobjekten auf einen oder mehrere der physischen Speicherbereiche, welche auf die virtuellen Speicherseiten abgebildet sind, wobei Zugriffe auf die physischen Speicherbereiche ermöglicht werden, wobei ein erstes (125a, 325) der Speicherobjekte Zugriff auf den ersten (117, 317) der physischen Speicherbereiche ermöglicht,
und **dadurch gekennzeichnet, dass**,
um der funktionellen Komponente zu ermöglichen, auf den ersten der physischen Speicherbereiche zuzugreifen, das Verfahren ferner umfasst:
- Übertragen (204) einer virtuellen Speicheradresse, welche der ersten der virtuellen Speicherseiten zugehörig ist, in eine entsprechende physische Speicheradresse in Einklang mit dem Abbilden,
- Verwenden der physischen Speicheradresse zum Lesen (204) des ersten der Datenobjekte von dem physischen Speicher, welches Zugriff auf den ersten der physischen Speicherbereiche ermöglicht, und
- Liefern (205) von Informationen, welche durch das gelesene Datenobjekt angezeigt werden, an die funktionelle Komponente, um so der funktionellen Komponente zu ermöglichen, auf den ersten der physischen Speicherbereiche zuzugreifen.

16. Computerprogramm zum Regeln/Steuern einer Speicher-Verwendung wenigstens einer funktionellen Komponente, wobei das Computerprogramm computer-ausführbare Anweisungen zum Regeln/Steuern eines programmierbaren Prozessors umfasst, um Verfahrensschritte nach Anspruch 15 auszuführen.

## Revendications

1. Dispositif pour commander l'utilisation de mémoire d'au moins un composant fonctionnel, le dispositif comprenant un système de processeur (401) configuré pour :
- réserver une partie d'une mémoire virtuelle, la partie réservée de la mémoire virtuelle comprenant une ou plusieurs page(s) de mémoire virtuelle contiguës et ne se chevauchant pas mutuellement (112-116, 312-316),
- élaborer une topographie de correspondance (128, 328) entre les pages de mémoire virtuelle et les zones de mémoire physique (117-119, 317-319) mises en oeuvre avec une mémoire physique, une première zone (117, 317) des zones de la mémoire physique étant configurée en correspondance avec une première page (116, 316) des pages de la mémoire virtuelle, et
- écrire, dans une ou plusieurs zone(s) de la mémoire physique en correspondance avec les pages de la mémoire virtuelle, des éléments de données validant les accès aux zones de la mémoire physique, un premier élément (125a, 325) des éléments de données validant l'accès à la première zone (117, 317) des zones de la mémoire physique,
et **caractérisé en ce que**,
afin de permettre au composant fonctionnel d'accéder à la première des zones de la mémoire physique, le système de processeur est, en outre, configuré pour :
- traduire une adresse de la mémoire virtuelle se rapportant à la première des pages de la mémoire virtuelle en une adresse de mémoire physique correspondante, en conformité avec la topographie de correspondance,
- utiliser l'adresse de mémoire physique pour lire, à partir de la mémoire physique, le premier élément des éléments de données qui permet l'accès à la première des zones de la mémoire physique, et
- délivrer une information désignée par l'élément de données lu au composant fonctionnel de façon à permettre au composant fonctionnel d'accéder à la première des zones de la mémoire physique.

2. Dispositif selon la revendication 1, dans lequel le système de processeur est configuré pour réserver la partie de la mémoire virtuelle de façon que la partie réservée de la mémoire virtuelle soit contiguë.

3. Dispositif selon la revendication 1 ou 2, dans lequel le système de processeur est configuré pour écrire les éléments de données de sorte que chacun des éléments de données comporte une adresse de mémoire physique se rapportant à la zone de la mémoire physique accessible à l'aide de l'élément de données considéré.

4. Dispositif selon l'une quelconque des revendications 1 à 3, dans lequel le système de processeur est configuré pour écrire chacun des éléments de données dans une zone particulière des zones de la mémoire physique qui est accessible avec l'aide de l'élément de données considéré.

5. Dispositif selon la revendication 4, dans lequel le système de processeur est configuré, dans le but de lire le premier élément des éléments de données, pour délivrer l'adresse de mémoire virtuelle se rapportant à la première des pages de la mémoire virtuelle à une unité de gestion de mémoire connectée à la mémoire physique et configurée pour traduire l'adresse de mémoire virtuelle en adresse de mémoire physique selon la topographie de correspondance.

6. Dispositif selon l'une quelconque des revendications 1 à 3, dans lequel le système de processeur est configuré pour écrire les éléments de données dans une seconde zone des zones de la mémoire physique configurée en une seconde page des pages de la mémoire virtuelle.

7. Dispositif selon la revendication 6, dans lequel le système de processeur est configuré dans le but de lire le premier élément des éléments de données pour :
- obtenir, sur la base de l'adresse de mémoire virtuelle se rapportant à la première des pages de la mémoire virtuelle, une autre adresse de mémoire virtuelle se rapportant à la seconde des pages de la mémoire virtuelle et permettant un accès au premier élément des éléments de données, et
- délivrer l'autre adresse de mémoire virtuelle à une unité de gestion de mémoire connectée à la mémoire physique et configurée pour traduire l'autre adresse de mémoire virtuelle en une adresse de mémoire physique en conformité avec la topographie de correspondance.

8. Dispositif selon la revendication 7, dans lequel le système de processeur est configuré pour conserver une table de consultation des adresses de mémoire virtuelle concernant la seconde des pages de la mémoire virtuelle et permettre les accès aux éléments de données, et, afin d'obtenir l'autre adresse de mémoire virtuelle concernant la seconde des pages de la mémoire virtuelle et permettre l'accès au premier des éléments de données, pour effectuer une consultation en utilisant l'adresse de la mémoire virtuelle se rapportant à la première des pages de la mémoire virtuelle en tant que clé de consultation.

9. Dispositif selon la revendication 7, dans lequel le système de processeur est configuré pour effectuer une ou plusieurs opération(s) logique(s) en vue d'obtenir, sur la base de l'adresse de mémoire virtuelle se rapportant à la première des pages de la mémoire virtuelle, l'autre adresse de mémoire virtuelle se rapportant à la seconde des pages de la mémoire virtuelle et permettre l'accès pour le premier élément des éléments de données.

10. Dispositif selon l'une quelconque des revendications 1 à 9, dans lequel le système de processeur est configuré pour empêcher les modifications de la topographie de correspondance entre les pages de la mémoire virtuelle et les zones de la mémoire physique dans des situations dans lesquelles une autre topographie de correspondance entre une autre mémoire virtuelle et d'autres zones de mémoire physique est constituée ou modifiée.

11. Elément de réseau comprenant :
- un ou plusieurs composant(s) fonctionnel(s) pour commander et réaliser un transfert de données entre l'élément de réseau et un réseau de transfert de données,
- une mémoire physique (406) pour mettre dans une mémoire tampon les données à transférer, et
- un système de processeur (401) connecté à la mémoire physique et à un composant ou à plusieurs composants fonctionnel(s),
dans lequel le système de processeur est configuré pour constituer un dispositif selon l'une quelconque des revendications 1 à 10 pour commander l'utilisation de la mémoire physique par l'intermédiaire d'un ou de plusieurs composant (s) fonctionnel (s).

12. Elément de réseau selon la revendication 11, dans lequel chacun des composants fonctionnels est configuré pour utiliser des listes chaînées des zones de la mémoire physique pour mettre en mémoire tampon les données reçues et à transmettre.

13. Elément de réseau selon la revendication 11, dans lequel :
- chacune des pages de la mémoire virtuelle est composée de deux ou de plusieurs pages secondaires contiguës de mémoire virtuelle, de dimension égale et ne se chevauchant pas mutuellement, et
- la zone de la mémoire physique correspondant à la page de mémoire virtuelle considérée comporte deux ou plusieurs zones secondaires contiguës de la mémoire physique, de dimension égale et ne se chevauchant pas mutuellement, chacune correspondant à l'une des pages secondaires de la mémoire virtuelle.

14. Elément de réseau selon la revendication 13, dans lequel chacun des composants fonctionnels est configuré pour utiliser des listes chaînées des zones secondaires de la mémoire physique pour mettre en mémoire tampon les données reçues et à transmettre.

15. Procédé permettant de commander l'utilisation de mémoire d'au moins un composant fonctionnel, le procédé comportant le fait de :
- réserver (201) une partie d'une mémoire virtuelle, la partie réservée de la mémoire virtuelle comprenant une ou plusieurs page(s) de mémoire virtuelle contiguës et ne se chevauchant pas mutuellement (112-116, 312-316),
- élaborer (202) une topographie de correspondance (128, 328) entre les pages de mémoire virtuelle et les zones de mémoire physique (117-119, 317-319) mises en oeuvre avec une mémoire physique, une première zone (117, 317) des zones de la mémoire physique étant en correspondance avec une première page (116, 316) des pages de la mémoire virtuelle, et
- écrire (203) dans la, ou dans plusieurs, zone(s) de la mémoire physique en correspondance avec les pages de la mémoire virtuelle, des éléments de données permettant les accès aux zones de la mémoire physique, un premier élément (125a, 325) des éléments de données permettant l'accès à la première (117, 317) des zones de la mémoire physique,
et **caractérisé en ce que**,
afin de permettre au composant fonctionnel d'accéder à la première des zones de la mémoire physique, le procédé comprend, de plus, le fait de :
- traduire (204) une adresse de mémoire virtuelle se rapportant à la première des pages de la mémoire virtuelle en une adresse de mémoire physique correspondante, en conformité avec la topographie de correspondance,
- utiliser l'adresse de mémoire physique pour lire (204), à partir de la mémoire physique, le premier élément des éléments de données qui permet l'accès à la première des zones de la mémoire physique, et
- délivrer (205) une information désignée par l'élément de données lu à un composant fonctionnel de façon à permettre au composant fonctionnel d'accéder à la première des zones de la mémoire physique.

16. Programme d'ordinateur pour commander l'utilisation de mémoire d'au moins un composant fonctionnel, le programme d'ordinateur comportant des instructions exécutables par ordinateur pour commander à un processeur programmable d'exécuter les étapes du procédé selon la revendication 15.
